# EUROPÄISCHE PATENTSCHRIFT

(11) **EP 3 578 294 B1**
(45) Veröffentlichungstag und Bekanntmachung des Hinweises auf die Patenterteilung: **17.03.2021**
(21) Anmeldenummer: 19178779.5
(22) Anmeldetag: 06.06.2019
(51) Int. Cl.: B23Q 17/00, B23Q 17/24

(54) **VORRICHTUNG UND VERFAHREN ZUR ÜBERWACHUNG EINES AUFNAHMESTATUS EINES WERKSTÜCKS**
DEVICE AND METHOD FOR MONITORING A HOLDING STATUS OF A WORKPIECE
DISPOSITIF ET PROCÉDÉ DE SURVEILLANCE D'UN ÉTAT DE RÉCEPTION D'UNE PIÈCE

(30) Priorität: 08.06.2018 DE 102018113741
(43) Veröffentlichungstag der Anmeldung: 11.12.2019
(73) Patentinhaber: CHIRON Group SE, 78532 Tuttlingen (DE)
(72) Erfinder: Eppler, Claus, 72469 Meßstetten (DE); Kempter, Christoph, 78579 Neuhausen ob Eck (DE); König, Jens, 78532 Tuttlingen (DE)
(74) Vertreter: Witte, Weller & Partner Patentanwälte mbB

(56) Entgegenhaltungen:
- DE-A1-102008 014 869
- DE-A1-102009 038 046
- DE-A1-102015 116 347
- US-A- 4 254 676

## Beschreibung

Die vorliegende Offenbarung bezieht sich auf eine Vorrichtung zur Überwachung eines Aufnahmestatus eines Werkstücks in einer Werkzeugmaschine oder einer definierten Umgebung einer Werkzeugmaschine. Ferner bezieht sich die vorliegende Offenbarung auf eine Werkzeugmaschine mit einer solchen Vorrichtung, ein Verfahren zur Überwachung eines Aufnahmestatus und ein entsprechendes Maschinensteuerungsprogramm.

Vorrichtungen der vorgenannten Art sind allgemein bekannt. Sie werden häufig in Werkzeugmaschinen zur Bearbeitung von Metallen bzw. fester Werkstoffe eingesetzt, insbesondere in CNC-Werkzeugmaschinen. Mit Hilfe derartiger Vorrichtungen kann unterschieden werden, ob sich überhaupt ein Werkstück in der Werkzeugmaschine oder einer zugeordneten Umgebung befindet oder nicht. Ferner kann sichergestellt werden, dass sich ein Werkstück in einer für dessen Bearbeitung erforderlichen Position befindet.

Die Überprüfung des Aufnahmestatus erfolgt dabei über eine Sensorik. Bei den eingesetzten Sensoren handelt es sich in der Regel um Druckluft- bzw. Staudrucksensoren, welche das Werkstück (bzw. den für das Werkstück vorgesehenen Raum) mit einem Luftstrahl aus einer Sensordüse abtasten. Durch eine anschließende Auswertung des entstehenden Rückstaudruckes kann unter anderem eine Aussage über die Anwesenheit und/oder Position eines Werkstücks in einer Werkstückaufnahme getroffen werden. Wenn das Werkstück wie vorgesehen aufgenommen ist, ergeben sich entsprechende Messwerte für den gemessenen Staudruck. Wenn das Werkstück hingegen falsch positioniert ist, ergeben sich abweichende Messerwerte, die den fehlerhaften Sitz anzeigen.

Vor allem bei der Fertigung von Einzelexemplaren oder kleinen Serien erfolgt die Bestückung der Werkzeugmaschinen manuell. Insofern ist der Bediener bzw. Werker selbst dafür verantwortlich, dass das Werkstück wie vorgesehen in die Werkzeugmaschine aufgenommen wird. Eine entsprechende unterstützende Zustandsüberwachung des Werkstücks ist daher hilfreich, wenn eine präzise Fertigung und ein fehlerarmer Betrieb gewährleistet sein sollen.

Aus der DE 10 2008 014 869 A1 ist ein Verfahren zum Betreiben einer Plattenaufteilanlage für großformatige Platten bekannt, wobei ein Werkstück in einem Handhabungsbereich von einer Person manuell gehandhabt wird, wobei Informationen und/oder Anweisungen zur manuellen Handhabung des Werkstücks mittels einer Informationseinrichtung an die Person ausgegeben werden, wobei ein sich im Handhabungsbereich befindendes Werkstück von einer Werkstückerfassungseinrichtung erfasst wird, und wobei die Handhabungsinformationen an die Person abhängig von Daten, die die Werkstückerfassungseinrichtung bereitstellt, ausgegeben werden. Die Informationseinrichtung ist als Laserprojektor gestaltet. Es wird also ein separate Einrichtung genutzt, um Informationen bereitzustellen.

Aus der DE 10 2005 002 448 A1 ist ein Verfahren zur Werkstückkontrolle unter Verwendung eines Staudrucksensors bekannt. Aus der US 2013/0071198 A1 ist eine Werkzeugmaschine mit optischer Überwachung des Werkstücks bekannt.

Eine Rückmeldung über den Aufnahmestatus des Werkstücks, also zum Beispiel über dessen Position, erfolgt für den Maschinenbediener üblicherweise an einem Bedien-Panel an der Außenhülle einer Werkzeugmaschine. Eine derartige Werkzeugmaschine und Vorrichtung zur Werkstücküberwachung sind beispielsweise aus der DE 10 2013 106 226 A1 bekannt.

Vor diesem Hintergrund liegt der vorliegenden Offenbarung die Aufgabe zugrunde, Überwachungsvorrichtungen und damit versehene Werkzeugmaschinen weiterzubilden, um die Bestückung mit Werkstücken zu vereinfachen. Dies soll mit einem möglichst geringen Mehraufwand erzielbar sein. Allgemein soll die Überwachungsvorrichtung dazu beitragen, Werkstückwechselzeiten zu minimieren. Die Bedienerergonomie soll möglichst verbessert werden. Ferner sollen die Qualität und Genauigkeit der Bearbeitung sowie die Zuverlässigkeit der Werkzeugmaschine insgesamt erhöht werden.

Die Vorrichtung betreffend wird diese Aufgabe gelöst durch eine Vorrichtung zur Überwachung eines Aufnahmestatus eines Werkstücks in einer Werkstückaufnahme in einem Arbeitsraum oder einer definierten Umgebung einer Werkzeugmaschine, wobei die Vorrichtung Folgendes aufweist:
- eine Beleuchtungseinrichtung zur Beleuchtung des Arbeitsraums in einem Normalbetriebsmodus,
- zumindest einen Werkstücksensor, der dazu ausgestaltet ist, einen Ist-Zustand des Werkstücks in der Werkstückaufnahme im Arbeitsraum zu erfassen und ein Überwachungssignal bereitzustellen, das den Ist-Zustand des Werkstücks beschreibt, und
- eine Steuereinrichtung,
wobei die Beleuchtungseinrichtung ferner in zumindest einem Signalbetriebsmodus betreibbar ist, und
wobei die Steuereinrichtung dazu ausgestaltet ist, auf Basis des Überwachungssignals zu bestimmen, ob sich das Werkstück in einem ersten Aufnahmestatus oder einem zweiten Aufnahmestatus befindet, und die Beleuchtungseinrichtung auf dieser Basis selektiv in dem Signalbetriebsmodus zu betreiben, um im Arbeitsraum eine visuelle Information zur Veranschaulichung des Aufnahmestatus des Werkstücks bereitzustellen.

Die Aufgabe der Erfindung wird auf diese Weise vollständig gelöst.

Erfindungsgemäß greift die Vorrichtung zur Signalisierung/Quittierung des Aufnahmestatus eines Werkstücks in der Werkzeugmaschine nämlich auf die ohnehin bereits verbaute Beleuchtungseinrichtung des Arbeitsraums zurück. Auf eine Signalisierung an einem Bedien-Panel an der Außenseite der Werkzeugmaschine kann im Idealfall verzichtet werden. Um eine Rückmeldung über den Aufnahmestatus zu erhalten, muss sich der Bediener somit nicht mehr aus dem Arbeitsraum herausbewegen/zurücklehnen. Stattdessen erhält der Bediener bzw. Werker noch im Arbeitsraum der Werkzeugmaschine Informationen über den Aufnahmestatus und kann unmittelbar reagieren und den Sitz des Werkstücks gegebenenfalls korrigieren. Die Werkstückwechselzeit kann reduziert werden. Der Bearbeiter ist vor ergonomisch ungünstigen Bewegungen seines Körpers geschützt.

Mit anderen Worten kann die Überwachungsvorrichtung beispielsweise den korrekten Sitz des Werkstücks direkt im Arbeitsraum über die dort ohnehin vorhandene Beleuchtung quittieren. Die Quittierung erfolgt visuell über Lichtsignale bzw. Leuchtsignale. Die Quittierung erfolgt zumindest in beispielhaften Ausführungsformen über die Beleuchtung des Arbeitsraums, die über die Steuereinrichtung selektiv aktiviert wird. Die Beleuchtung leuchtet im Normalbetriebsmodus den Arbeitsraum aus, um für gute Sichtverhältnisse zu sorgen. In dem zumindest einen Signalbetriebsmodus wird die Beleuchtung zur Informationsübertragung genutzt, um dem Bediener/Werker noch im Arbeitsraum zu signalisieren, ob das Werkstück korrekt platziert wurde oder nicht.

Ferner bietet die Vorrichtung gemäß dem obigen Aspekt den Vorteil, dass keine neuen Komponenten (struktureller Art) verbaut werden müssen. Die Steuereinrichtung ist dazu ausgestaltet ist, die im Arbeitsraum vorhandene Beleuchtungseinrichtung anzusteuern und über diese Beleuchtungseinrichtung dem Bediener bzw. Werker Rückmeldung über den Aufnahmestatus des Werkstücks zu geben. Eine Signalausgabe am Bedien-Panel ist damit nicht mehr unbedingt notwendig, kann aber zusätzlich erfolgen. Gegebenenfalls kann sogar auf bestehende Maschinenkomponenten, wie etwa einzelne Signalleuchten, am Bedien-Panel verzichtet werden. Die Vorrichtung eignet sich zur Nachrüstung bestehender Systeme. Diese können in einfacher Weise nachgerüstet werden.

Der Ist-Zustand ist ein gegenwärtig erfasster (realer) Zustand. Der Soll-Zustand ist ein Zielzustand bzw. ein gewünschter Zustand. Die Zustände können sich hinsichtlich der korrekten Aufnahme des Werkstücks in der Werkstückaufnahme ergeben. Sodann kann die Vorrichtung dazu genutzt werden, zu ermitteln, ob das Werkstück richtig oder womöglich falsch aufgenommen ist. Die spiegelt sich in den Aufnahmestatus wieder.

Bei der Beleuchtungseinrichtung handelt es sich, zumindest in beispielhaften Ausführungsformen, um zumindest eine Lichtquelle, insbesondere eine Lichtquelle zur Erzeugung polychromatischen Lichtes, insbesondere um eine zumindest Weißlichtquelle. Die Beleuchtungseinrichtung dient zum Beleuchten, insbesondere zum Ausleuchten des Arbeitsraums für den Bediener. Auf diese Weise verbessert sich die Beobachtbarkeit und Überwachbarkeit. Lichtquellen umfassen beispielsweise Glühlampen, Halogenlampen, LED-Lampen, Leuchtstofflampen und Natriumdampf-Hochdrucklampen. Weißlicht umfasst beispielsweise die Emission breitbandigen Lichtes mit geeigneter Farbtemperatur, etwa Tageslichtweiß oder Neutralweiß. Allgemein wird eine für die Anwendung passende Farbtemperatur gewählt.

Die vorstehende Ausgestaltung der Überwachungseinrichtung eignet sich insbesondere für die Überwachung von Werkstücken, bzw. von deren Aufnahmezustand im Arbeitsraum der Werkzeugmaschine.

Ferner ermöglicht die Vorrichtung einen unter ergonomischen Gesichtspunkten verbesserten Bestückungsvorgang. Zur Überprüfung der Bestückung muss sich der Werker nicht mehr umständlich aus dem Arbeitsraum zurücklehnen, um ein Quittierungssignal über ein Display oder sonstige Anzeige an der Außenseite der Werkzeugmaschine zu erfassen. Vielmehr kann der Werker nun den Aufnahmestatus des Werkstücks direkt während der Bestückung bzw. seines Aufenthalts im Arbeitsraum bzw. Bedienraum der Werkzeugmaschine überprüfen.

Ferner können die Signale unter Verwendung einer Speicher- und Auswerteeinheit beispielsweise zur Bereitstellung von Zustandshistorien genutzt werden.

Bei der definierten Umgebung handelt es sich beispielsweise um einen Pufferspeicher, eine temporär außerhalb des Arbeitsraumes angeordnete auswechselbare Aufnahmevorrichtung, und/oder eine Aufnahme für das Werkstück ein einer Handhabungseinrichtung, die dann den Arbeitsraum bestückt.

In einer beispielhaften Ausgestaltung ordnet die Steuereinrichtung den Ist-Zustand dem ersten Aufnahmestatus zu, wenn der Ist-Zustand mit einem Soll-Zustand übereinstimmt, und wobei die Steuereinrichtung den Ist-Zustand dem zweiten Aufnahmestatus zuordnet, wenn der Ist-Zustand nicht mit dem Soll-Zustand übereinstimmt. Als Soll-Zustand ist beispielsweise die korrekte Aufnahme eines Werkstücks in ein Spannnest definiert. Wenn das Werkstück den richtigen Sitz im Spannnest hat, stimmen Ist-Zustand und Soll-Zustand überein. Die Steuereinrichtung ordnet den Ist-Zustand dann dem ersten Aufnahmestatus zu. Ist der Sitz hingegen nicht korrekt, weil zum Beispiel eine Spannbacke das Werkstück nicht richtig fasst, findet eine Zuordnung zum zweiten Aufnahmestatus statt. Dies kann auch bedeuten, dass der zweite Aufnahmestatus ausgewählt wird, wenn sich überhaupt kein Werkstück in der Werkstückaufnahme befindet.

In einer weiteren beispielhaften Ausgestaltung betreibt die Steuereinrichtung die Beleuchtungseinrichtung in dem Signalbetriebsmodus, wenn der Ist-Zustand dem ersten Aufnahmestatus zugeordnet ist bzw. wenn durch das Überwachungssignal angezeigt wird, dass sich das Werkstück im ersten Aufnahmestatus befindet. Der Modus der Beleuchtungseinrichtung wird vom Normalbetriebsmodus also erst dann in den Signalbetriebsmodus umgestellt, wenn der Ist-Zustand des Werkstücks mit dem Soll-Zustand übereinstimmt. Beispielsweise wird der Signalbetriebsmodus erst dann aktiviert, wenn das Werkstück in Bezug auf alle dafür vorgesehenen Befestigungselemente korrekt platziert wurde.

In einer vorteilhaften Ausgestaltung ist die Beleuchtungseinrichtung in den Arbeitsraum integriert. Vorzugsweise sind von der Beleuchtungseinrichtung ausgegebene Signale im Arbeitsraum sichtbar. Üblicherweise ist der Arbeitsraum einer Werkzeugmaschine ohnehin mit einer Beleuchtungseinrichtung ausgestattet, die dem Werker das Überwachen der Werkstückbearbeitung erleichtert. Grundsätzlich ist zwar auch eine Beleuchtung des Arbeitsraums durch eine Beleuchtungseinrichtung außerhalb des Arbeitsraums denkbar, hier ist aber oftmals eine Behinderung des Werkers durch Beschattungseffekte gegeben.

In einer weiteren vorteilhaften Ausgestaltung ist die Beleuchtungseinrichtung in einem ersten Signalbetriebsmodus und in einem zweiten Signalbetriebsmodus betreibbar, wobei die Steuereinrichtung die Beleuchtungseinrichtung in dem ersten Signalbetriebsmodus betreibt, wenn der Ist-Zustand dem ersten Aufnahmestatus zugeordnet ist, und wobei die Steuereinrichtung die Beleuchtungseinrichtung in dem zweiten Signalbetriebsmodus betreibt, wenn der Ist-Zustand dem zweiten Aufnahmestatus zugeordnet ist. Das bedeutet, dass der Modus der Beleuchtungseinrichtung vom zweiten auf den ersten Signalbetriebsmodus umgestellt wird, sobald der Ist-Zustand des Werkstücks mit dem Soll-Zustand übereinstimmt. Es ist beispielsweise vorgesehen, dass die Beleuchtungseinrichtung der Vorrichtung im Normalbetriebsmodus betrieben wird, so lange sich überhaupt kein Werkstück im Arbeitsraum der Werkzeugmaschine befindet. Beispielhafte Ausführungsformen sehen vor, dass die Beleuchtungseinrichtung im zweiten Signalbetriebsmodus betrieben wird, wenn der Werkstücksensor ein Werkstück erfasst, das Werkstück sich aber noch nicht im Soll-Zustand befindet. Wenn der Bediener das Werkstück dann in den Soll-Zustand gebracht hat, wird der Modus der Beleuchtungseinrichtung ein weiteres Mal umgestellt, und zwar in den ersten Signalbetriebsmodus, um dies zu quittieren.

Gemäß einer beispielhaften Ausgestaltung ist die Beleuchtungseinrichtung zur Ausgabe von im Zeitablauf binären oder dreistufigen Signalen betreibbar. Es ist beispielsweise vorstellbar, die Beleuchtungseinrichtung in drei zeitlichen Stufen zu betreiben. Unter den drei Stufen des Betriebs der Beleuchtungseinrichtung ist etwa zu verstehen, dass die Beleuchtungseinrichtung für eine erste Zeitdauer und eine zweite Zeitdauer aktiviert werden kann, sowie für eine dritte Zeitdauer deaktiviert werden kann. Beispielsweise ist die erste Zeitdauer länger als die zweite Zeitdauer, und beispielsweise ist die zweite Zeitdauer länger als die dritte Zeitdauer. Die Beleuchtung der Beleuchtungseinrichtung kann also beispielsweise im Signalbetriebsmodus zunächst für fünf Sekunden aktiviert werden, dann für eine Sekunde deaktiviert werden, wieder für 2,5 Sekunden aktiviert werden und dann wieder für eine Sekunde deaktiviert werden. Dies dient jedoch lediglich zur Veranschaulichung und ist nicht einschränkend zu verstehen. Der dreistufige Betrieb entspricht insofern einem Lichtmorse-Modus. Andere Signalfolgen sind denkbar.

In einer weiteren beispielhaften Ausgestaltung umfasst der Signalbetriebsmodus der Vorrichtung ein selektives Deaktivieren und/oder Aktivieren der Beleuchtungseinrichtung. Es ist vorstellbar, dass die Beleuchtungseinrichtung im Normalbetriebsmodus durchgehend aktiviert ist und beim Wechsel in den Signalbetriebsmodus (zumindest kurzzeitig) deaktiviert wird. Die Dauer der Beleuchtungsdeaktivierung kann im Prinzip beliebig sein. Allerdings sind ein lediglich kurzes Ausschalten und eine baldige Rückkehr in den Normalbetriebsmodus von Vorteil, da der Bediener bzw. Werker dann auch während der Werkstückbearbeitung einen nahezu vollständig und dauerhaft beleuchteten Arbeitsraum vorfindet. Um dem Bediener bzw. Werker deutlich zu machen, dass der Ist-Zustand des Werkstücks mit dem Soll-Zustand übereinstimmt, kann der Signalbetriebsmodus auch ein mehrmaliges Deaktivieren bzw. Aktivieren der Beleuchtungseinrichtung umfassen (pulsierende Beleuchtung). So kann die Beleuchtung beispielsweise für eine vordefinierte Zeit blinken, sobald der vorgesehene Aufnahmestatus des Werkstücks erreicht wurde.

In einer weiteren Ausgestaltung der Vorrichtung umfasst der Signalbetriebsmodus eine Änderung einer Beleuchtungsstärke und/oder einer Beleuchtungsfarbe. Beispielsweise veranlasst die Steuereinrichtung einen kurzen Wechsel der Beleuchtungsfarbe (zum Beispiel von Weiß auf Grün, oder von Rot auf Grün), wenn der gewünschte Aufnahmestatus erreicht ist und die Beleuchtungseinrichtung im Signalbetriebsmodus betrieben wird. Die Beleuchtungsstärke kann analog zur Aktivierung/Deaktivierung variiert werden (einmaliger Impuls oder Pulsieren).

Gemäß einer weiteren beispielhaften Ausgestaltung umfasst der Ist-Zustand eine Zustandsgröße, die aus der Gruppe ausgewählt ist, die aus Folgendem besteht: Anwesenheit, Abwesenheit, Position, Orientierung, ein Spannzustand des Werkstücks, sowie beliebige Kombinationen daraus. Selbiges gilt für den Soll-Zustand. Insbesondere ist denkbar, dass die Steuereinrichtung aus dem von dem mindestens einen Werkstücksensor bereitgestellten Überwachungssignal, welches den Ist-Zustand des Werkstücks beschreibt, ableitet, ob das Werkstück in korrekter Lage und Ausrichtung in der Werkstückaufnahme aufgenommen wurde. Ferner kann die Steuereinrichtung dazu ausgestaltet sein, anhand des Überwachungssignals zu erkennen, ob ein Werkstück fest genug eingespannt ist.

Gemäß einer weiteren beispielhaften Ausgestaltung der Vorrichtung ist der zumindest eine Werkstücksensor aus der Gruppe ausgewählt, die aus Folgendem besteht: mechanische Sensoren, optische Sensoren, induktive Sensoren, elektrische Sensoren, Wegsensoren, Drucksensoren, Kraftsensoren ist, sowie Kombinationen daraus. Durch Staudrucksensoren kann in einfacher Weise überprüft werden, ob ein Werkstück richtig positioniert bzw. eingespannt ist. Dadurch können zum Beispiel auch Fehlfunktionen einer Werkstückspanneinrichtung während des Betriebs erfasst und von der Steuerung berücksichtigt werden.

Gemäß einer weiteren beispielhaften Ausgestaltung weist die Vorrichtung ferner eine Eingabeeinheit auf, die dazu ausgestaltet ist, Bedienereingaben/Selektionen aufzunehmen, die für die Steuereinrichtung zur Steuerung der Beleuchtungseinrichtung bestimmt sind. Unter Bedienereingaben ist etwa eine konkrete Auswahl betreffend ein oder mehrere zeitliche, räumliche und/oder farbige Signale oder Signalfolgen für die Quittierung oder allgemein die Rückmeldung zum Aufnahmestatus zu verstehen. Ferner können die Nutzerinformationen auch Informationen darüber umfassen, ob der Nutzer, d.h. der Werker bzw. Bediener, zusätzlich zum ersten Signalbetriebsmodus einen zweiten Signalbetriebsmodus (Fehleranzeige) wünscht. Es versteht sich, dass die Eingabeeinheit ein Bestandteil der Vorrichtung bilden kann, aber auch als eine von der Vorrichtung separate Einheit betrieben werden kann.

Beispielhaft ist die Steuereinrichtung dazu ausgestaltet, eine Beleuchtungseinrichtung in einem Beladebereich einer Werkzeugmaschine zu steuern. Dies gilt insbesondere für solche Werkzeugmaschinen, bei denen der Arbeitsraum den eigentlichen Arbeitsbereich, in dem die Bearbeitung stattfindet, sowie einen Beladebereich umfasst, in dem ein Werkstückwechsel erfolgt. Zu diesem Zweck ist es vorstellbar, die Werkzeugmaschine mit zumindest zwei Werkstückaufnahmen zu versehen, die zwischen einer Beladeposition/Bestückungsposition und einer Bearbeitungsposition verlagert werden können. Insbesondere kann die Steuereinrichtung dazu ausgestaltet sein, die Beleuchtungseinrichtung im Beladebereich in Abhängigkeit von dem durch den mindestens einen Werkstücksensor bereitgestellten Überwachungssignal selektiv im Signalbetriebsmodus zu betreiben, um auch im Beladebereich eine visuelle Information zur Veranschaulichung des Aufnahmestatus des Werkstücks bereitzustellen.

Bei der Beleuchtungseinrichtung im Arbeitsraum oder auch Beladebereich handelt es sich vorzugsweise um eine oder mehrere Leuchtdioden (LEDs). Zum einen bietet die vergleichsweise lange Lebensdauer von LEDs eine wartungsarme Beleuchtung. Zum anderen ist die Erwärmung von LEDs im Betrieb minderwichtig. Andere technische Lösungen zur Lichtsignalisierung sind ebenfalls einsetzbar.

Die obige Aufgabe wird ferner durch eine Werkzeugmaschine gelöst, mit
- einem Gestell,
- einem Arbeitsraum mit einer Werkstückaufnahme zur Aufnahme eines Werkstücks, und
- einer Überwachungsvorrichtung gemäß zumindest einer hierin beschriebenen Ausführungsform, die zur Überwachung des Aufnahmestatus des Werkstücks in der Aufnahme ausgebildet ist.

Auch auf diese Weise wird die Aufgabe der Erfindung gelöst.

Die Werkzeugmaschine ist beispielsweise als Drehmaschine, Fräsmaschine, Lasermaschine (Laserbearbeitungsmaschine), und/oder als kombinierte Maschine zur Dreh-, Fräs- und/oder Laserbearbeitung ausgeführt. Insbesondere handelt sich um eine sogenannte Mehrachsmaschine mit einer Mehrzahl gesteuerter Achsen. Insbesondere umfasst die Werkzeugmaschine eine Einhausung mit einer verschließbaren Öffnung, die einen Zugang in den Arbeitsraum erlaubt. Grundsätzlich kann es sich aber auch um andere Arten und Ausgestaltungen von Werkzeugmaschinen handeln. Das Gestell kann auch als Maschinenbett bezeichnet werden oder ausgeführt sein.

Das Verfahren betreffend wird die obige Aufgabe gelöst durch ein Verfahren zur Überwachung eines Aufnahmestatus eines Werkstücks in einer Werkstückaufnahme in einem Arbeitsraum oder einer definierten Umgebung einer Werkzeugmaschine. Dabei umfasst das Verfahren die folgenden Schritte:
- Betreiben einer Beleuchtungseinrichtung in einem Normalbetriebsmodus zur Beleuchtung des Arbeitsraums,
- Aufnehmen eines Werkstücks in der Werkstückaufnahme im Arbeitsraum,
- Erfassen des Ist-Zustands des Werkstücks in der Werkstückaufnahme im Arbeitsraum,
- Bereitstellen eines Überwachungssignals, das den Ist-Zustand des Werkstücks beschreibt,
- Bestimmen, auf Basis des Überwachungssignals, ob sich das Werkstück in einem ersten Aufnahmestatus oder einem zweiten Aufnahmestatus befindet, und
- auf dieser Basis, selektives Betreiben der Beleuchtungseinrichtung in einem Signalbetriebsmodus, um im Arbeitsraum eine visuelle Information zur Veranschaulichung des Aufnahmestatus des Werkstücks bereitzustellen.

Auch auf diese Weise wird die der Erfindung zugrunde liegende Aufgabe gelöst.

Die Aufgabe wird ferner gelöst durch ein Maschinensteuerungsprogramm, das Programmcode aufweist, der dazu ausgestaltet ist, eine Steuereinrichtung einer Werkzeugmaschine zu veranlassen, die Schritte des Verfahrens gemäß einem Ausführungsbeispiel der vorliegenden Offenbarung auszuführen, wenn das Maschinensteuerungsprogramm auf der Steuereinrichtung ausgeführt wird.

Es versteht sich, dass die vorstehend genannten und die nachfolgend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1:: eine perspektivische Ansicht einer beispielhaften Ausführungsform einer Werkzeugmaschine;
- Fig. 2:: eine perspektivische Ansicht einer beispielhaften Ausführungsform eines Arbeitsraums einer Werkzeugmaschine;
- Fig. 3A-3E:: verschiedene Ansichten einer weiteren beispielhaften Ausführungsform eines Arbeitsraums einer Werkzeugmaschine;
- Fig. 4:: eine perspektivische Ansicht einer weiteren beispielhaften Ausführungsform einer beispielhaften Ausgestaltung einer Werkzeugmaschine;
- Fig. 5A-5B:: verschiedene Diagramme, die eine zeitliche Abfolge eines Signals zur Steuerung der Beleuchtung durch die Beleuchtungseinrichtung zeigen;
- Fig. 6:: ein Blockschaltbild zur Veranschaulichung einer beispielhaften Ausführungsform einer Überwachungsvorrichtung;
- Fig. 7:: ein Blockschaltbild zur Veranschaulichung einer weiteren beispielhaften Ausführungsform einer Überwachungsvorrichtung; und
- Fig. 8:: ein Ablaufdiagramm zur Veranschaulichung einer beispielhaften Ausführungsform eines Verfahrens zur Überwachung des Aufnahmestatus von Werkstücken in einer Werkzeugmaschine.

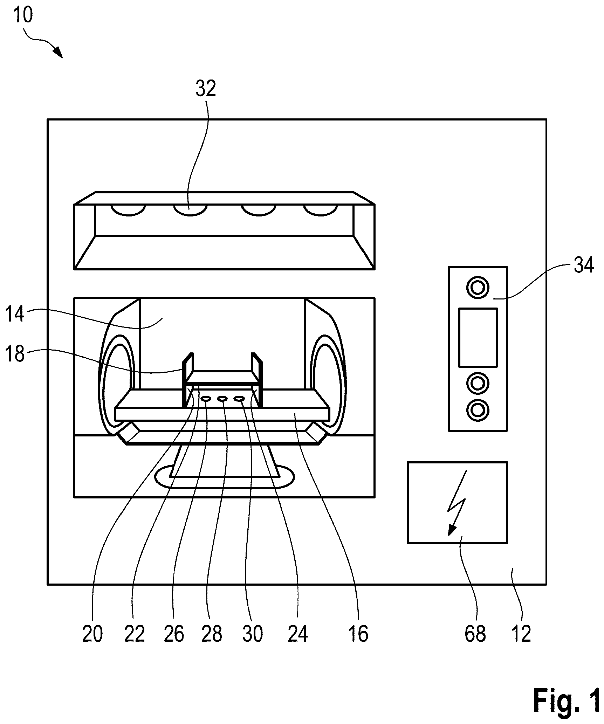

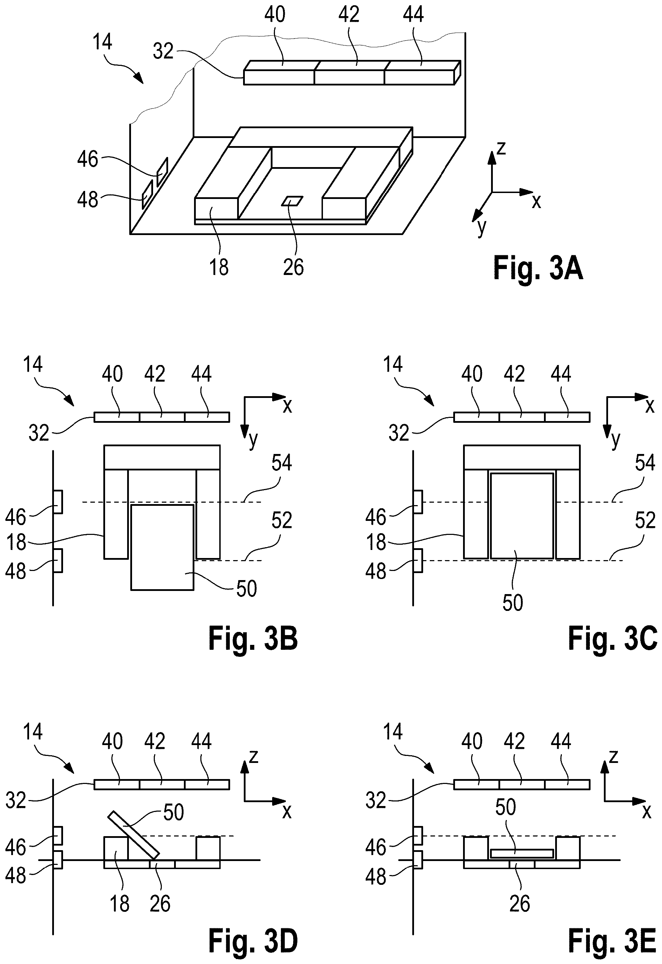

Fig. 1 zeigt eine perspektivische Ansicht einer beispielhaften Ausführungsform einer Werkzeugmaschine 10. Die gezeigte Werkzeugmaschine 10 umfasst ein Gestell 12, das einen Arbeitsraum 14 umschließt, wobei sich in dem Arbeitsraum 14 eine Wiegenplatte 16 mit einer Werkstückaufnahme 18 zur Aufnahme eines Werkstücks (in den Figuren 3B-3C mit 50 bezeichnet) befindet. Ferner weist die Werkzeugmaschine 10 eine Beleuchtungseinrichtung 32 und ein Bedienfeld 34 auf, welches sich an der an der Außenseite des Maschinengestells befindet. In den Darstellungen in Fig. 1, Fig. 2, und Fig. 5 ist aus Veranschaulichungsgründen kein Werkstück dargestellt.

Die Werkstückaufnahme 18 weist beispielsweise drei Anschläge auf. Das Werkstück ist dann korrekt in der Werkstückaufnahme 18 platziert, wenn bestimmte Anlageflächen/Anlagepunkte des Werkstücks an den Anschlägen 20, 22 und 24 anliegen. Ob das Werkstück korrekt in der Werkstückaufnahme 18 platziert ist, wird mit Hilfe von drei Werkstücksensoren 26, 28, 30 überprüft, die sich am Boden der Wiegenplatte 16 befinden. Es versteht sich, dass in alternativen Ausgestaltungen mehr oder weniger Werkstücksensoren bei der Werkstückaufnahme 18 verbaut sind.

Bei den Werkstücksensoren 26, 28, 30 handelt es sich in dieser beispielhaften Ausführungsform um Staudrucksensoren. Durch Messdüsen wird die Umgebung der Sensoren 26, 28, 30 abgetastet. Der sich dabei ergebende Staudruck gibt Hinweise auf die Anwesenheit, Orientierung und/oder Maßhaltigkeit eines eingebrachten Werkstücks. Die Messungen der Sensoren 26, 28, 30 werden als Überwachungssignale an die Maschinensteuerung übertragen. Die Maschinensteuerung umfasst beispielsweise eine Steuereinrichtung, die in Fig. 1 durch einen mit 68 bezeichneten Block angedeutet ist.

Die Maschinensteuerung bzw. die Steuereinrichtung 68 der Werkzeugmaschine 10 wertet die Überwachungssignale aus. Insbesondere findet bei der Auswertung eine Zuordnung des von den Sensoren 26, 28, 30 ermittelten Ist-Zustands des Werkstücks zu einem ersten oder einem zweiten Aufnahmestatus statt. Wird der von einem der Sensoren 26, 28, 30 erfasste Ist-Zustand, auf Basis des jeweiligen Überwachungssignals, dem ersten Aufnahmestatus zugeordnet, bedeutet dies, dass die Steuereinrichtung 68 davon ausgeht, dass das Werkstück zumindest an der jeweiligen Position des Sensors dem Soll-Zustand entspricht, beispielsweise in dem von diesem Sensor überwachten Teil der Werkstückaufnahme korrekt platziert ist. Wenn jeder der Sensoren 26, 28, 30 ein entsprechendes Überwachungssignal bereitstellt, das zu einer Zuordnung zum ersten Aufnahmestatus führt, nimmt die Steuereinrichtung 68 an, dass das Werkstück vollkommen korrekt platziert wurde. Andernfalls geht die Steuereinrichtung 68 davon aus, dass vor Beginn der Werkstückbearbeitung noch eine Positionskorrektur oder Neupositionierung des Werkstücks vorgenommen werden muss, oder dass noch gar kein Werkstück eingelegt wurde.

Grundsätzlich ist es auch vorstellbar, dass nicht jeder ermittelte Ist-Zustand einem ersten Aufnahmestatus zugeordnet werden muss, um von einer korrekten Aufnahme des Werkstücks auszugehen. Insbesondere bei Einsatz einer Vielzahl von Sensoren, welche unter Umständen auch redundante Sensoren umfassen, ist es vorstellbar, dass die Steuereinrichtung 68 schon bei einer vorbestimmten, kleineren Anzahl von Zuordnungen der jeweils erfassten Ist-Zustände zu dem ersten Aufnahmestatus (bzw. zum Soll-Zustand) von einem korrekten Sitz des Werkstücks ausgeht.

Die Steuereinrichtung 68 steuert die Beleuchtungseinrichtung 32 auf Basis der Zuordnungen bzw. Überwachungssignale. Sofern kein Werkstück in die Werkstückaufnahme 18 des Arbeitsraums 14 eingebracht wurde, wird die Beleuchtungseinrichtung 32 im Normalbetriebsmodus betrieben. Beispielsweise wird der Arbeitsraum 14 im Normalbetriebsmodus vollständig ausgeleuchtet, um dem Werker das Bestücken der Werkzeugmaschine und die visuelle Überwachung des Betriebs der Werkzeugmaschine zu erleichtern.

Wird in Reaktion auf die Positionsüberwachung durch die Steuereinrichtung 68 festgestellt, dass sich das Werkstück in der korrekten Position befindet, so wechselt die Steuereinrichtung 68 den Modus der Beleuchtungseinrichtung 32 vom Normalbetriebsmodus in einen (ersten) Signalbetriebsmodus. Der Bediener bzw. Werker erfährt also über die Beleuchtungseinrichtung 32 des Arbeitsraums, ob er das Werkstück korrekt in die Werkstückaufnahme eingebracht hat. Die Beleuchtungseinrichtung 32 quittiert das Einlegen des Werkstücks bzw. die Bestückung der Werkstückaufnahme 18. Eine Vergewisserung auf Basis einer Rückmeldung/Quittierung über das (außerhalb des Arbeitsraums 14 vorgesehene) Bedienpanel 34 oder sonstige Indikatorleuchten außerhalb des Arbeitsraums 14 ist nicht unbedingt notwendig.

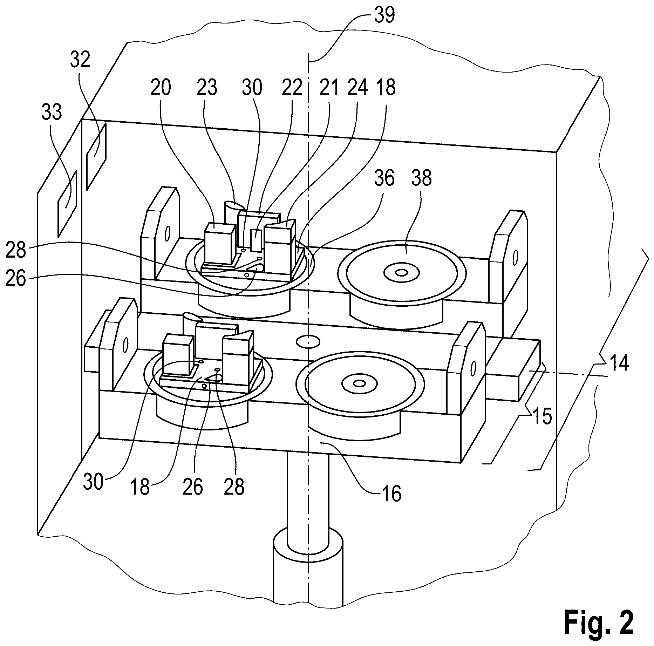

Mit Bezugnahme auf Fig. 2 wird eine Ausgestaltung eines Arbeits- und Beladeraums einer beispielhaften Ausführungsform einer Werkzeugmaschine veranschaulicht. Der Arbeitsraum 14 umfasst den eigentlichen Arbeitsbereich, in dem die Bearbeitung stattfindet, sowie einen in Fig. 2 mit 15 bezeichneten Beladebereich, in dem ein Werkstückwechsel erfolgt. Im Sinne der vorliegenden Offenbarung ist daher der Begriff Arbeitsraum nicht einschränkend auszulegen. Der Arbeitsraum deckt auch Bereiche ab, in denen (gleichwohl noch in der Werkzeugmaschine) ein Werkstückwechsel erfolgt. Gleiches gilt für den Beladebereich, der sich auch außerhalb der eigentlichen Werkzeugmaschine befinden kann.

Im Arbeitsraum 14 bzw. in dessen Beladebereich 15 sind Wiegenplatten 16 mit jeweils zwei Planscheiben 36 und 38 vorgesehen. Auf jeweils einer Planscheibe 36, 38 befindet sich eine Werkstückaufnahme 18 in Form eines Spannnests. Diese Gestaltung ist lediglich beispielhafter Natur.

Die Wiegenplatten 16 befinden sich auf einem Rondell, das um eine vertikale Achse 39 drehbar ist. Nach der Bestückung eines Spannnests 18 mit einem Werkstück in dem Beladebereich 15 kann der Werker das Rondell um 180°drehen, so dass sich das eingebrachte Werkstück dann im eigentlichen Arbeitsbereich des Arbeitsraums 14 befindet. Die Beleuchtungseinrichtung 32 des Arbeitsraums 14 ist mit einer Beleuchtungseinheit für den Beladebereich 15 versehen, die mit 33 bezeichnet ist. Die Spannnester 18 sind mit diversen Anschlägen 20, 22, 24 ausgestattet. Ferner befinden sich in dem Spannnest 18 diverse Spannelemente 21, 23 zur Befestigung des Werkstücks sowie Werkstücksensoren 26, 28, 30 zur Detektion des Werkstücks.

Die Sensoren 26, 28, 30 sind dazu ausgestaltet, den Aufnahmezustand des Werkstücks in der Werkstückaufnahme 18 zu erfassen. Die Werkstücksensoren 26, 28, 30 stellen der Steuereinrichtung 68 der Werkzeugmaschine ein entsprechendes Signal bereit. Die Steuereinrichtung 68 wertet das Signal aus. Je nach Auswertungsergebnis stellt die Steuereinrichtung 68 (die in Fig. 2 nicht explizit dargestellt ist) dann den Modus der Beleuchtungseinrichtung 32 im Arbeitsraum 14 ein.

Insbesondere ist es vorstellbar, dass die Beleuchtungseinrichtung 32 im Arbeitsraum 14 bzw. die Beleuchtungseinheit 33 im Beladebereich 15 mit jeweils drei Beleuchtungsmodi betreibbar sind.

Solange auf den Spannestern 18 kein Werkstück aufgespannt ist, wird die Beleuchtungseinheit 33 im Beladebereich 15 bzw. generell die Beleuchtungseinrichtung 32 im Arbeitsraum 14 im Normalbetriebsmodus betrieben. Befinden sich Werkstücke in den Werkstückaufnahmen 18, wird in einen ersten oder einen zweiten Signalbetriebsmodus umgeschaltet, abhängig vom Sitz des Werkstücks in der Werkstückaufnahme 18.

Sitzt beispielsweise das Werkstück korrekt in der Werkstückaufnahme 18 im Arbeitsraum 14, so wird die Beleuchtungseinrichtung 32 im ersten Signalbetriebsmodus betrieben. Selbiges gilt für ein Werkstück im Beladebereich 15.

Fig. 3A zeigt eine perspektivische, stark vereinfachte Ansicht einer zweiten Ausführungsform eines Arbeitsraums 14 einer Werkzeugmaschine. In dem Arbeitsraum 14 befindlich sind eine U-förmige Werkstückaufnahme 18 mit einem Boden, drei Werkstücksensoren 26, 46 und 48 sowie eine Beleuchtungseinrichtung 32. Der Werkstücksensor 26 ist ein Staudrucksensor, welcher in den Boden der Werkstückaufnahme 18 integriert ist. Bei den Sensoren 46 und 48 handelt es sich jeweils um Sensoren einer Lichtschranke.

Der Staudrucksensor 26 ist dazu ausgestaltet, die Anwesenheit oder Abwesenheit eines Werkstücks in der Werkstückaufnahme 18 zu erfassen. Der Lichtschrankensensor 46 ist dazu ausgestaltet, die Höhe des Werkstücks in der Werkstückaufnahme zu ermitteln, während der Lichtschrankensensor 48 dazu ausgestaltet ist, die Position des Werkstücks auf dem Boden in der Werkstückaufnahme 18 zu ermitteln.

Rückmeldungen über den Sitz des Werkstücks in der Werkstückaufnahme 18 erhält der Werker über drei Leuchtelemente 40, 42, 44 der Beleuchtungseinrichtung 32. Die Beleuchtungseinrichtung 32 kann in dieser Ausführungsform in drei Modi betrieben werden: Einem Normalbetriebsmodus, einem ersten Signalbetriebsmodus und einem zweiten Signalbetriebsmodus. In welchem der drei Modi die Beleuchtungseinrichtung betrieben wird, hängt von der Auswertung der Signale der Werkstücksensoren 26, 46 und 48 durch die Steuereinrichtung 68 ab.

Grundsätzlich wird die Beleuchtungseinrichtung 32 im Normalbetriebsmodus betrieben, solange sich kein Werkstück in der Werkstückaufnahme befindet. Sofern der Werkstücksensor 26 also kein Werkstück in der Werkstückaufnahme 18 detektiert, werden die Leuchtelemente 40, 42, 44 im Normalmodus betrieben. In dieser Ausführungsform werden die Leuchtelemente 40, 42, 44 im Normalbetriebsmodus durchgehend betrieben.

Im Arbeitsraum 14 sind in diesem Betriebsmodus also durchgehend durch alle drei Leuchtelemente (zum Beispiels LEDs) der Beleuchtungseinrichtung 32 aktiviert.

Fig. 3B zeigt eine Draufsicht des Arbeitsraums gemäß Fig. 3A. Insbesondere zeigt Fig. 3B ein Werkstück 50, das noch nicht korrekt in der Werkstückaufnahme 18 platziert wurde. Wie zu erkennen ist, ragt das Werkstück 50 an der Vorderseite der Werkstückaufnahme 18 heraus. Dies führt zur Unterbrechung der Lichtstrahlen 52 der Lichtschranke. Der Lichtsensor 48 kann dementsprechend kein Signal 52 erfassen.

Die Steuereinrichtung 68 deutet dies dahingehend, dass das Werkstück 50 bezüglich seiner Position in der x-y-Ebene nicht korrekt platziert wurde. Weiterhin dargestellt ist, dass das Werkstück das Lichtsignal 54 zum Lichtsensor 46 nicht stört, also in z-Richtung nicht über die Werkstückaufnahme 18 hinausragt. Die Steuereinrichtung 68 quittiert dies über den zweiten Signalbetriebsmodus der Beleuchtungseinrichtung 32. Bei gestörtem Lichtsignal 52, aber ungestörtem Lichtsignal 54 werden die Leuchtelemente 40 und 44 ausgeschaltet. Das Leuchtelement 42 leuchtet weiter.

Durch diese Beleuchtung wird dem Werker angezeigt, dass er das Werkstück in der x-y-Ebene zu korrigieren hat. Fig. 3C zeigt ebenfalls eine Draufsicht des Arbeitsraums 14. In dieser Figur ist zu erkennen, dass das Werkstück korrekt in der Werkstückaufnahme sitzt. Sowohl das Lichtsignal 52 als auch das Lichtsignal 54 sind nicht unterbrochen. Dementsprechend gibt die Steuereinrichtung 68 der Beleuchtungseinrichtung 32 den ersten Signalbetriebsmodus vor, in welchem in dieser Ausführungsform alle drei Leuchtelemente 40, 42, 44 zumindest einmal kurz ausgeschaltet werden, um die korrekte Aufnahme des Werkstücks 50 zu quittieren.

Fig. 3D zeigt eine Seitenansicht des Arbeitsraums gemäß Fig. 3A. Wie in Fig. 3D zu erkennen ist, dass das Werkstück 50 in z-Richtung über die Werkstückaufnahme 18 hinausragt und damit das Lichtsignal unterbricht. Aus der Unterbrechung des Lichtsignals 54 erkennt die Steuereinrichtung 68, dass die Position des Werkstücks in z-Richtung noch zu korrigieren ist. Der fehlerhafte Sitz des Werkstücks 50 führt dazu, dass die Steuereinrichtung 68 den Modus der Beleuchtungseinrichtung 32 auf den zweiten Signalbetriebsmodus stellt.

In dieser lediglich beispielhaften Ausführungsform der Werkzeugmaschine ist der zweite Signalbetriebsmodus in mehrere Untermodi unterteilt. Fehlerhafte Positionierungen in x-, y-, bzw. z-Richtung werden unterschiedlich quittiert. Demnach werden bei einem fehlerhaften Sitz in z-Richtung nicht die Leuchtelemente 40 und 44 ausgeschaltet sondern das Leuchtelement 42. Der Werker erhält also nicht nur Informationen darüber, dass das Werkstück 50 fehlerhaft platziert ist, sondern auch darüber, inwiefern das Werkstück 50 fehlplatziert ist.

Eine derartige Veranschaulichung kann nicht nur über die räumliche Verteilung der Beleuchtung erreicht werden, sondern auch über eine zeitlich variierende Beleuchtung, etwa in Form von Morsezeichen oder ähnlichen (Licht-)Signalfolgen.

Fig. 3E zeigt eine Seitenansicht des Arbeitsraums gemäß Fig. 3D, wobei zu erkennen ist, dass das Werkstück 50 in der dargestellten Werkstückaufnahme 18 korrekt platziert ist.

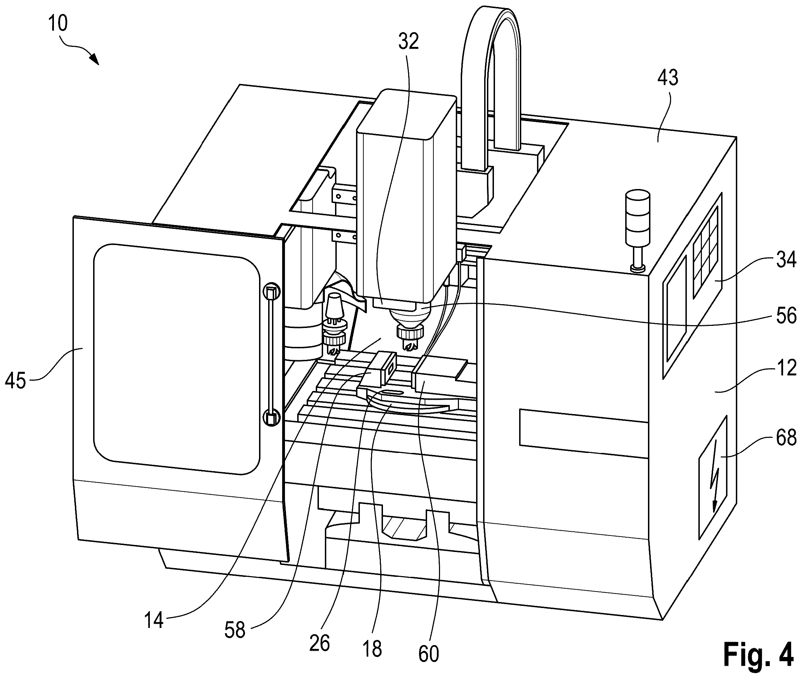

Fig. 4 zeigt eine perspektivische Ansicht einer weiteren beispielhaften Ausführungsform einer Werkzeugmaschine 10. Bei der gezeigten Werkzeugmaschine 10 handelt es sich um eine Fräsmaschine. Diese weist ein Gestell 12 auf, welches einen Arbeitsraum 14 definiert. Die Werkzeugmaschine 10 weist ferner ein Gehäuse 43 auf, dass der Arbeitsraum 14 umschließt. Der Arbeitsraum 14 ist durch eine Schutztür 45 verschließbar. Die Schutztür 45 bildet demgemäß eine verschließbare Öffnung des Gehäuses 43. Im Arbeitsraum 14 befindet sich eine Werkstückaufnahme 18. In dem in Fig. 4 gezeigten Zustand ist oberhalb der Werkstückaufnahme 18 ein Bearbeitungskopf 56 vorgesehen, der ein Werkzeug zur Bearbeitung des Werkstücks trägt (in Fig. 4 ist aus Veranschaulichungsgründen kein Werkstück gezeigt). Bei der in Fig. 4 gezeigten beispielhaften Ausgestaltung sind der Beladebereich und der Bearbeitungsbereich im Arbeitsraum 14 in Überdeckung. Mit anderen Worten gibt es keine zusätzliche isolierte Beladeposition für die Werkstückaufnahme 18. Ferner sind in Fig. 4 ein Bedienpanel 34 und eine Steuereinrichtung 68 angedeutet.

Im Arbeitsraum 14 ist eine Beleuchtungseinrichtung 32 vorgesehen, durch welche insbesondere der Bearbeitungskopf 56 und die Werkstückaufnahme 18 beleuchtet werden kann. Die Spannvorrichtung 18 umfasst zwei Spannbacken 58 und 60, welche jeweils auf einer Schiene verfahrbar sind. Die Spannbacken 58 und 60 sind dazu ausgestaltet ein Werkstück einzuspannen und damit eine präzise Bearbeitung des Werkstücks mit dem Bearbeitungskopf 56 zu ermöglichen.

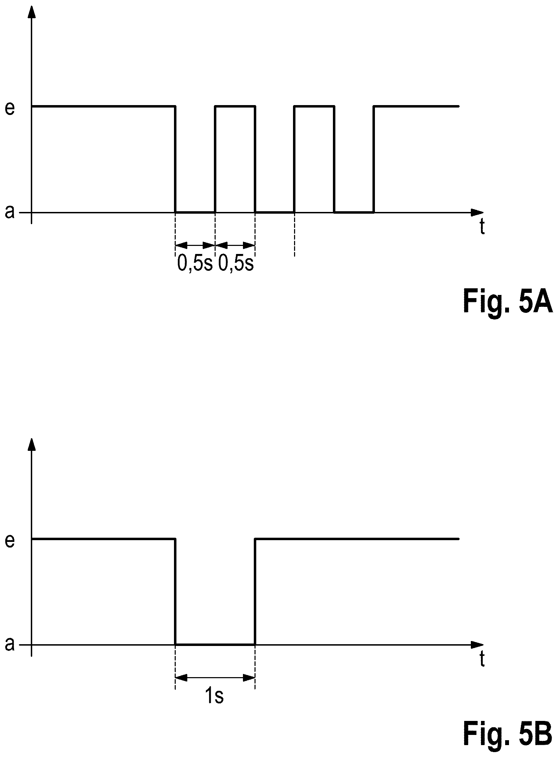

Mithilfe von Werkstücksensoren 26 und 28 (nicht explizit in Fig. 5 gezeigt), die jeweils in die Spannbacken 58 und 60 integriert sind, kann überprüft werden, ob das Werkstück korrekt eingespannt wurde.

Die Steuereinrichtung 68 empfängt und prüft die von den Werkstücksensoren 26 und 28 erfassten Signale und stellt fest, ob das Werkstück in der Werkstückaufnahme korrekt eingespannt wurde. Die kann beispielsweise auf Basis von Vergleichswerten erfolgen. Die benötigten Vergleichswerte können über das Bedienpanel 34 oder andere Schnittstellen eingegeben bzw. ausgewählt werden. Abhängig davon, welches Resultat der Vergleich mit den Vergleichsdaten ergibt, steuert die Steuereinrichtung 68 die Beleuchtungseinrichtung 32. Solange die Auswertung ergibt, dass sich kein korrekt eingespanntes Werkstück in der Werkstückaufnahme befindet, wird die Beleuchtungseinrichtung 32 im Normalbetriebsmodus (also zu Beleuchtungszwecken) betrieben. In diesem Modus leuchtet die Beleuchtungseinrichtung 32 den Arbeitsraum 14 durchgehend aus.

Stellt die Steuereinrichtung 68 hingegen fest, dass sich ein Werkstück wie gewünscht zwischen den Spannbacken 58 und 60 befindet, so stellt die Steuereinrichtung 68 den Beleuchtungsmodus um. Der Normalbetriebsmodus wird abgestellt und durch einen ersten Signalbetriebsmodus ersetzt. Im ersten Signalbetriebsmodus blinkt die Beleuchtungseinrichtung für fünf Sekunden, bevor wieder eine durchgehende Beleuchtung hergestellt wird. Unter Blinken ist hierbei wiederholtes ein An- und Ausschalten der Beleuchtung mit einer definierten Frequenz zu verstehen, also beispielsweise in einem 0,5-Sekunden-Takt.

Durch das Blinken wird dem Werker signalisiert, dass das Werkstück korrekt eingebracht wurde und der Bearbeitungsprozess beginnen kann. Die Schutztür 45 kann dann geschlossen werden, ohne dass der Werker einen Blick auf das Bedienpanel 36 an einer Außenseite der Werkzeugmaschine 10 werfen muss.

Fig. 5A zeigt ein Diagramm, welches eine zeitliche Abfolge eines Signals zur Steuerung der Beleuchtung durch die Beleuchtungseinrichtung 32 veranschaulicht. Die eingeschaltete Beleuchtung der Beleuchtungseinrichtung 32 ist dabei mit e bezeichnet, eine ausgeschaltete Beleuchtung mit a. Dem zeitlichen Ablauf folgend ist zu erkennen, dass die Beleuchtung zunächst eingeschaltet ist und danach im 0,5-Sekundentakt dreimal aus- bzw. wieder eingeschaltet wird. Danach ist die Beleuchtung wieder durchgehend eingeschaltet.

Die durchgehende Beleuchtung am Anfang und Ende des zeitlichen Ablaufs stellt den Normalbetriebsmodus dar. Der durch das getaktete (mehrmalige) Aus- und Anschalten erkennbare Bereich stellt den zweiten Signalbetriebsmodus dar. Die Steuereinrichtung 68 betreibt die Beleuchtungseinrichtung im Normalbetriebsmodus, wenn die Werkstücksensoren der Werkzeugmaschine kein Werkstück in der Werkstückaufnahme detektieren. Detektieren die Werkstücksensoren hingegen ein Werkstück in der Werkstückaufnahme, wird der Normalbetriebsmodus beendet und durch einen ersten Signalbetriebsmodus ersetzt. Wenn die Werkstücksensoren weiterhin einen fehlerhaften Sitz des Werkstücks detektieren, stellt die Steuereinrichtung 68 den zweiten Signalbetriebsmodus ein.

Fig. 5B zeigt ein weiteres Diagramm, welches ebenso ein zeitliches Muster einer Signalfolge zur Steuerung der Beleuchtung durch die Beleuchtungseinrichtung 32 veranschaulicht. In diesem Ablaufdiagramm ist zu erkennen, dass nach einiger Zeit die Beleuchtung einmalig (etwa für eine Sekunde) ausgeschaltet wird. Danach wird die Beleuchtung wieder eingeschaltet. Das einmalige Abschalten der Beleuchtungseinrichtung stellt den ersten Signalbetriebsmodus dar. Die Steuereinrichtung 68 stellt diesen ersten Signalbetriebsmodus ein, wenn ein Werkstück korrekt in der Werkstückaufnahme aufgenommen wurde. Durch die in Fig. 5A und Fig. 5B gezeigten Betriebsmodi der Beleuchtungseinrichtung kann der Werker ohne weiteres erkennen, in welchem Zustand sich das Werkstück in der Werkstückaufnahme befindet.

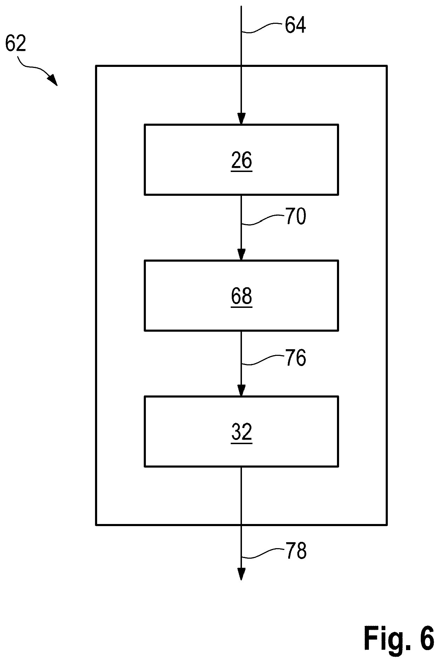

Fig. 6 zeigt ein Blockschaltbild einer beispielhaften Ausführungsform einer Überwachungsvorrichtung 62. In dieser Ausführungsform umfasst die Vorrichtung 62 einen Werkstücksensor 26, eine (elektronische) Steuereinrichtung 68 sowie eine Beleuchtungseinrichtung 32. Der Werkstücksensor 26 ist dazu ausgestaltet, ein Umgebungssignal zu erfassen. Beispielsweise kann der Werkstücksensor ein Drucksensor sein, etwa ein Staudrucksensor, welcher dazu ausgestaltet ist, ein Drucksignal aufzunehmen. Alternativ kann es sich bei dem Werkstücksensor 26 um einen Lichtsensor (Lichtschranke, etc.) handeln, der dazu ausgestaltet ist, ein Lichtsignal aufzunehmen. Andere Sensortypen sind vorstellbar. Verschiedenartige Sensoren können miteinander kombiniert werden. Der Werkstücksensor 26 stellt das aufgenommene Umgebungssignal 64 als Überwachungssignal 70 der Steuereinrichtung 68 bereit. Die Steuereinrichtung 68 wertet das Überwachungssignal 70 aus. Abhängig vom Ergebnis der Auswertung wird ein entsprechendes Steuersignal 76 an die Beleuchtungseinrichtung 32 weitergegeben, welche für die Steuerung der Beleuchtung 78 eines Arbeitsraums einer Werkzeugmaschine verantwortlich ist. Auf diese Weise kann die korrekte Aufnahme eines Werkstücks, also die korrekte Bestückung einer Werkstückaufnahme quittiert werden.

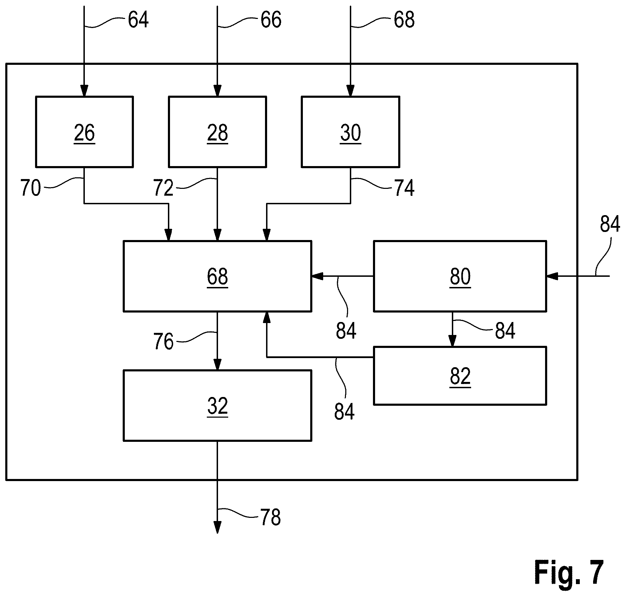

Fig. 7 zeigt ein Blockschaltbild einer weiteren beispielhaften Ausführungsform der Vorrichtung 62. Neben drei Werkstücksensoren 26, 28, 30 einer Steuereinrichtung 68 und einer Beleuchtungseinrichtung 32 weist diese Ausführungsform der Vorrichtung 62 ferner eine Eingabeeinheit 80 und eine Speichereinheit 82 auf. Jeder der Werkstücksensoren 26, 28, 30 ist dazu ausgestaltet, jeweils ein Zustandssignal 64, 66 und 68 zu erfassen und jeweils in ein Überwachungssignal 70, 72, 74 umzuwandeln. Die Steuereinrichtung 68 nimmt diese Überwachungssignale 70, 72, 74 auf. Ferner ist die Steuereinrichtung 68 dazu ausgestaltet, eine Bedienereingabe/Bedienerselektion 84 aufzunehmen. Dies geschieht entweder direkt über die Eingabeeinheit 18 oder über die Speichereinheit 82. Als Eingabesignale in Betracht kommen beispielsweise Referenzwerte für die Messung der Werkstücksensoren, also beispielsweise Druckmesswerte für Drucksensoren, aber auch Einstellungen, welche die Anzahl oder Gestaltung der Betriebsmodi der Beleuchtungseinrichtung betreffen.

Sämtliche Daten werden dann durch die Steuereinrichtung 68 ausgewertet und die Beleuchtungseinrichtung 32 bzw. deren Beleuchtung 78 mithilfe eines Steuersignals 76 gesteuert, um die Beladung/Bestückung der Werkstückaufnahme zu quittieren.

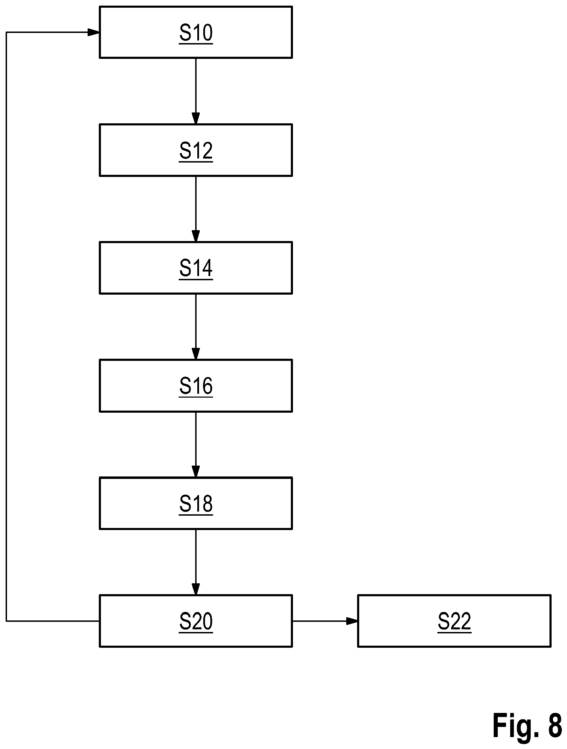

Fig. 8 zeigt ein Blockdiagramm zur Veranschaulichung einer beispielhaften Ausführungsform eines Verfahrens zur Überwachung eines Aufnahmestatus eines Werkstücks in einer Werkzeugmaschine.

In einem ersten Schritt S10 wird eine Beleuchtungseinrichtung zunächst in einem Normalbetriebsmodus betrieben, um einen Arbeitsraum der Werkzeugmaschine auszuleuchten. Ein weiterer Schritt S12 umfasst ein Einbringen eines Werkstücks in eine Werkstückaufnahme einer Werkzeugmaschine. Ein weiterer Schritt S14 umfasst ein Erfassen eines Aufnahmestatus des Werkstücks in der Werkstückaufnahme mit einem Werkstücksensor. Der Werkstücksensor stellt dann in einem weiteren Schritt S16 ein Überwachungssignal bereit, welches den Aufnahmestatus des Werkstücks beschreibt.

Im Schritt S18 wird das Überwachungssignal ausgewertet. Je nach Aufnahmestatus des Werkstücks kann ein bestimmter Betriebsmodus für die Beleuchtungseinrichtung ausgewählt werden, um eine optische Rückmeldung/Quittierung bereits im Arbeitsraum zu ermöglichen. Hierbei kann zwischen einem Normalbetriebsmodus und einem (ersten) Signalbetriebsmodus ausgewählt werden. Der Signalbetriebsmodus wird gewählt, wenn ein Werkstück korrekt in die Werkstückaufnahme eingesetzt wurde.

Im Schritt S22 wird die Beleuchtungseinrichtung dann im Signalbetriebsmodus betrieben, um die korrekte Aufnahme zu quittieren. Andernfalls wird der Normalbetriebsmodus solange beibehalten, bis das Werkstück korrekt in die Werkstückaufnahme aufgenommen wurde. Das Verfahren kann erneut mit dem Schritt S10 beginnen.

## Patentansprüche

1. Vorrichtung (62) zur Überwachung eines Aufnahmestatus eines Werkstücks (50) in einer Werkstückaufnahme (18) in einem Arbeitsraum (14) oder einer definierten Umgebung einer Werkzeugmaschine (10), mit
- zumindest einem Werkstücksensor (26), der dazu ausgestaltet ist, einen Ist-Zustand des Werkstücks (50) in der Werkstückaufnahme im Arbeitsraum (14) zu erfassen und ein Überwachungssignal bereitzustellen, das den Ist-Zustand des Werkstücks (50) beschreibt, und
- einer Steuereinrichtung (68),
**dadurch gekennzeichnet, dass**
eine Beleuchtungseinrichtung (32) zur Beleuchtung des Arbeitsraums (14) in einem Normalbetriebsmodus vorgesehen ist, die Beleuchtungseinrichtung (32) ferner in zumindest einem Signalbetriebsmodus betreibbar ist, und
die Steuereinrichtung (68) dazu ausgestaltet ist,
auf Basis des Überwachungssignals zu bestimmen, ob sich das Werkstück (50) in einem ersten Aufnahmestatus oder einem zweiten Aufnahmestatus befindet, und die Beleuchtungseinrichtung (32) auf dieser Basis selektiv in dem Signalbetriebsmodus zu betreiben, um im Arbeitsraum (14) eine visuelle Information zur Veranschaulichung des Aufnahmestatus des Werkstücks (50) bereitzustellen.

2. Vorrichtung (62) nach Anspruch 1,
**dadurch gekennzeichnet, dass** die Steuereinrichtung (68) den Ist-Zustand dem ersten Aufnahmestatus zuordnet, wenn der Ist-Zustand mit einem Soll-Zustand übereinstimmt, und dass die Steuereinrichtung (68) den Ist-Zustand dem zweiten Aufnahmestatus zuordnet, wenn der Ist-Zustand nicht mit dem Soll-Zustand übereinstimmt.

3. Vorrichtung (62) nach Anspruch 1 oder 2,
**dadurch gekennzeichnet, dass** die Steuereinrichtung (68) die Beleuchtungseinrichtung (32) in dem Signalbetriebsmodus betreibt, wenn der Ist-Zustand dem ersten Aufnahmestatus zugeordnet ist.

4. Vorrichtung (62) nach einem der vorhergehenden Ansprüche,
**dadurch gekennzeichnet, dass** die Beleuchtungseinrichtung (32) in den Arbeitsraum (14) integriert ist, und dass von der Beleuchtungseinrichtung (32) ausgegebene Signale vorzugsweise im Arbeitsraum (14) sichtbar sind.

5. Vorrichtung (62) nach einem der vorhergehenden Ansprüche,
**dadurch gekennzeichnet, dass** die Beleuchtungseinrichtung (32) in einem ersten Signalbetriebsmodus und einem zweiten Signalbetriebsmodus betreibbar ist, dass die Steuereinrichtung (68) die Beleuchtungseinrichtung (32) in dem ersten Signalbetriebsmodus betreibt, wenn der Ist-Zustand dem ersten Aufnahmestatus zugeordnet ist, und dass die Steuereinrichtung (68) die Beleuchtungseinrichtung (32) in dem zweiten Signalbetriebsmodus betreibt, wenn der Ist-Zustand dem zweiten Aufnahmestatus zugeordnet ist.

6. Vorrichtung (62) nach einem der vorhergehenden Ansprüche,
**dadurch gekennzeichnet, dass** die Beleuchtungseinrichtung (32) zur Ausgabe von im Zeitablauf binären oder dreistufigen Signalen betreibbar ist.

7. Vorrichtung (62) nach einem der vorhergehenden Ansprüche,
**dadurch gekennzeichnet, dass** der Signalbetriebsmodus ein selektives Deaktivieren und/oder Aktivieren der Beleuchtungseinrichtung (32) umfasst.

8. Vorrichtung (62) nach einem der vorhergehenden Ansprüche,
**dadurch gekennzeichnet, dass** der Signalbetriebsmodus eine Änderung einer Beleuchtungsstärke und/oder einer Beleuchtungsfarbe umfasst.

9. Vorrichtung (62) nach einem der vorhergehenden Ansprüche,
**dadurch gekennzeichnet, dass** der Ist-Zustand eine Zustandsgröße umfasst, die aus der Gruppe ausgewählt ist, die aus Folgendem besteht: Anwesenheit, Abwesenheit, Position, Orientierung, ein Spannzustand des Werkstücks (50), sowie Kombinationen daraus.

10. Vorrichtung (62) nach einem der vorhergehenden Ansprüche,
**dadurch gekennzeichnet, dass** der zumindest eine Werkstücksensor (26) aus der Gruppe ausgewählt ist, die aus Folgendem besteht: mechanische Sensoren, optische Sensoren, induktive Sensoren, elektrische Sensoren, Wegsensoren, Drucksensoren, Kraftsensoren ist, sowie Kombinationen daraus.

11. Vorrichtung (62) nach einem der vorhergehenden Ansprüche,
**dadurch gekennzeichnet, dass** der zumindest eine Werkstücksensor (26) ein Staudrucksensor ist.

12. Vorrichtung (62) nach einem der vorhergehenden Ansprüche,
**gekennzeichnet durch** eine Eingabeeinheit (80), die dazu ausgestaltet ist, Bedienereingaben (84) für die Steuereinrichtung (68) zur Steuerung der Beleuchtungseinrichtung (32) aufzunehmen.

13. Werkzeugmaschine (10) mit
- einem Gestell (12),
- einem Arbeitsraum (14) mit einer Werkstückaufnahme (18) zur Aufnahme eines Werkstücks (50), und
- einer Überwachungsvorrichtung (62) nach einem der Ansprüche 1 bis 12, die zur Überwachung des Aufnahmestatus des Werkstücks (50) in der Aufnahme (18) ausgebildet ist.

14. Verfahren zur Überwachung eines Aufnahmestatus eines Werkstücks (50) in einer Werkstückaufnahme (18) in einem Arbeitsraum (14) oder einer definierten Umgebung einer Werkzeugmaschine (10), mit den folgenden Schritten:
- Betreiben einer Beleuchtungseinrichtung (32) in einem Normalbetriebsmodus zur Beleuchtung des Arbeitsraums (14),
- Aufnehmen eines Werkstücks (50) in der Werkstückaufnahme (18) im Arbeitsraum (14),
- Erfassen des Ist-Zustands des Werkstücks (50) in der Werkstückaufnahme (18) im Arbeitsraum (14),
- Bereitstellen eines Überwachungssignals, das den Ist-Zustand des Werkstücks (50) beschreibt,
- Bestimmen, auf Basis des Überwachungssignals, ob sich das Werkstück (50) in einem ersten Aufnahmestatus oder einem zweiten Aufnahmestatus befindet, und
- auf dieser Basis, selektives Betreiben der Beleuchtungseinrichtung (32) in einem Signalbetriebsmodus, um im Arbeitsraum (14) eine visuelle Information zur Veranschaulichung des Aufnahmestatus des Werkstücks (50) bereitzustellen.

15. Maschinensteuerungsprogramm, das Programmcode aufweist, der dazu ausgestaltet ist, eine Steuereinrichtung (68) einer Werkzeugmaschine (10) zu veranlassen, die Schritte des Verfahrens nach Anspruch 14 auszuführen, wenn das Maschinensteuerungsprogramm auf der Steuereinrichtung (68) ausgeführt wird.

## Claims

1. A device (62) for monitoring a mounting state of a workpiece (50) in a workpiece mount (18) in a working space (14) or a defined surrounding area of a machine tool (10), comprising
- at least one workpiece sensor (26), which is configured to detect an actual state of the workpiece (50) in the workpiece mount in the working space (14), and to provide a monitoring signal, which describes the actual state of the workpiece (50), and
- a control unit (68),
**characterized in that**
- an illumination arrangement (32) for illuminating the working space (14) in a normal mode of operation is provided,
the illumination arrangement (32) is further operable in at least one signal mode of operation, and
the control unit (68) is configured to,
determine, on the basis of the monitoring signal, whether the workpiece (50) is in a first mounting state or a second mounting state, and
selectively operate the illumination arrangement (32) on thas basis in the signal mode of operation to provide visual information in the working space (14) for visualizing the mounting state of the workpiece (50).

2. The device (62) according to claim 1,
**characterized in that** the control unit (68) assigns the actual state to the first mounting state if the actual state corresponds with a target state, and **in that** the control unit (68) assigns the actual state to the second mounting state if the actual state does not correspond with the target state.

3. The device (62) according to claim 1 or 2,
**characterized in that** the control unit (68) operates the illumination arrangement (32) in the signal mode of operation if the actual state is assigned to the first mounting state.

4. The device (62) according to any one of the preceding claims,
**characterized in that** the illumination arrangement (32) is integrated into the working space (14), and **in that** signals emitted by the illumination arrangement (32) are preferably visible in the working space (14).

5. The device (62) according to any one of the preceding claims,
**characterized in that** the illumination arrangement (32) is operable in a first signal mode of operation and a second signal mode of operation, **in that** the control unit (68) operates the illumination arrangement (32) in the first signal mode of operation if the actual state is assigned to the first mounting state, and **in that** the control unit (68) operates the illumination arrangement (32) in the second signal mode of operation if the actual state is assigned to the second mounting state.

6. The device (62) according to any one of the preceding claims,
**characterized in that** the illumination arrangement (32) is operable to emit signals that are binary or three-step signals over time.

7. The device (62) according to any one of the preceding claims,
**characterized in that** the signal mode of operation comprises selective deactivation and/or activation of the illumination arrangement.

8. The device (62) according to any one of the preceding claims,
**characterized in that** the signal mode of operation comprises a change in illumination level and/or color.

9. The device (62) according to any one of the preceding claims,
**characterized in that** the actual state comprises a state variable selected from the group consisting of: presence, absence, position, orientation, a clamping state of the workpiece (50), and combinations thereof.

10. The device (62) according to any one of the preceding claims,
**characterized in that** the at least one workpiece sensor (26) selected from the group consisting of: mechanical sensors, optical sensors, inductive sensors, electrical sensors, displacement sensors, pressure sensors, force sensors, and combinations thereof.

11. The device (62) according to any one of the preceding claims,
**characterized in that** the at least one workpiece sensor (26) is a dynamic pressure sensor.

12. The device (62) according to any one of the preceding claims,
**characterized by** an input unit (80) configured to receive operator inputs (84) for the control unit (68) for controlling the illumination arrangement (32).

13. A machine tool (10) comprising
- a frame (12),
- a working space (14) having a workpiece mount (18) for receiving a workpiece (50), and
- a monitoring device (62) in accordance with any one of claims 1 to 12,
which is configured to monitor the mounting state of the workpiece (50) in the mount (18).

14. A method for monitoring a mounting state of a workpiece (50) in a workpiece mount (18) in a working space (14) or a defined surrounding area of a machine tool (10), the method comprising the following steps:
- operating an illumination arrangement (32) in a normal mode of operation for illuminating the working space (14),
- mounting a workpiece (50) in the workpiece mount (18) in the working space (14),
- detecting the actual state of the workpiece (50) in the workpiece mount (18) in the working space (14),
- providing a monitoring signal describing the actual state of the workpiece (50),
- determining, on the basis of the monitoring signal, whether the workpiece (50) is in a first mounting state or a second mounting state, and
- based thereon, selectively operating the illumination arrangement (32) in a signal mode of operation to provide visual information in the working space (14) for visualizing the mounting state of the workpiece (50).

15. A machine control program comprising program code means configured to cause a control unit (68) of a machine tool (10) to carry out the steps of the method as claimed in claim 14, when the machine control program is carried out on the control unit (68).

## Revendications

1. Dispositif (62) de surveillance d'un état de réception d'une pièce (50) dans un porte-pièce (18) dans un espace de travail (14) ou un environnement défini d'une machine-outil (10), comprenant
- au moins un capteur de pièce (26) qui est conçu pour détecter un état réel de la pièce (50) dans le porte-pièce dans l'espace de travail (14) et pour fournir un signal de surveillance qui décrit l'état réel de la pièce (50), et
- un moyen de commande (68),
**caractérisé en ce qu'**il est prévu un moyen d'éclairage (32) destiné à éclairer l'espace de travail (14) dans un mode de fonctionnement normal,
le moyen d'éclairage (32) est en outre utilisable dans au moins un mode de fonctionnement par signal, et
le moyen de commande (68) est conçu
pour déterminer, sur la base du signal de surveillance, si la pièce (50) se trouve dans un premier état de réception ou dans un deuxième état de réception, et
pour faire fonctionner sélectivement sur cette base le moyen d'éclairage (32) dans le mode de fonctionnement par signal afin de fournir dans l'espace de travail (14) une information visuelle destinée à illustrer l'état de réception de la pièce (50).

2. Dispositif (62) selon la revendication 1,
**caractérisé en ce que** le moyen de commande (68) associe l'état réel au premier état de réception lorsque l'état réel correspond à un état de consigne, et **en ce que** le moyen de commande (68) associe l'état réel au deuxième état de réception lorsque l'état réel ne correspond pas à l'état de consigne.

3. Dispositif (62) selon la revendication 1 ou 2,
**caractérisé en ce que** le moyen de commande (68) fait fonctionner le moyen d'éclairage (32) dans le mode de fonctionnement par signal lorsque l'état réel est associé au premier état de réception.

4. Dispositif (62) selon l'une des revendications précédentes,
**caractérisé en ce que** le moyen d'éclairage (32) est intégré dans l'espace de travail (14), et **en ce que** les signaux émis par le moyen d'éclairage (32) sont de préférence visibles dans l'espace de travail (14).

5. Dispositif (62) selon l'une des revendications précédentes,
**caractérisé en ce que** le moyen d'éclairage (32) peut fonctionner dans un premier mode de fonctionnement par signal et un deuxième mode de fonctionnement par signal, **en ce que** le moyen de commande (68) fait fonctionner le moyen d'éclairage (32) dans le premier mode de fonctionnement par signal lorsque l'état réel est associé au premier état de réception, et **en ce que** le moyen de commande (68) fait fonctionner le moyen d'éclairage (32) dans le deuxième mode de fonctionnement par signal lorsque l'état réel est associé au deuxième état de réception.

6. Dispositif (62) selon l'une des revendications précédentes,
**caractérisé en ce que** le moyen d'éclairage (32) peut être utilisé pour délivrer au cours du temps des signaux binaires ou à trois niveaux.

7. Dispositif (62) selon l'une des revendications précédentes,
**caractérisé en ce que** le mode de fonctionnement par signal comprend l'activation et/ou la désactivation sélective du moyen d'éclairage (32).

8. Dispositif (62) selon l'une des revendications précédentes,
**caractérisé en ce que** le mode de fonctionnement par signal comprend une modification d'une intensité d'éclairage et/ou d'une couleur d'éclairage.

9. Dispositif (62) selon l'une des revendications précédentes,
**caractérisé en ce que** l'état réel comprend une grandeur d'état qui est sélectionnée dans le groupe constitué par : une présence, une absence, une position, une orientation, un état de serrage de la pièce (50), ainsi que des combinaisons de ceux-ci.

10. Dispositif (62) selon l'une des revendications précédentes,
**caractérisé en ce que** ledit au moins un capteur de pièce (26) est sélectionné dans le groupe constitué par : des capteurs mécaniques, des capteurs optiques, des capteurs inductifs, des capteurs électriques, des capteurs de déplacement, des capteurs de pression, des capteurs de force et des combinaisons de ceux-ci.

11. Dispositif (62) selon l'une des revendications précédentes,
**caractérisé en ce que** ledit au moins un capteur de pièce (26) est un capteur de pression dynamique.

12. Dispositif (62) selon l'une des revendications précédentes,
**caractérisé par** une unité de saisie (80) qui est conçue pour recevoir des saisies d'opérateur (84) destinées au moyen de commande (68) pour commander le moyen d'éclairage (32).

13. Machine-outil (10) comprenant
- un châssis (12),
- un espace de travail (14) doté d'un porte-pièce (18) destiné à recevoir une pièce (50), et
- un dispositif de surveillance (62) selon l'une des revendications 1 à 12, qui est conçu pour surveiller l'état de réception de la pièce (50) dans le réceptacle (18).

14. Procédé de surveillance d'un état de réception d'une pièce (50) dans un porte-pièce (18) dans un espace de travail (14) ou un environnement défini d'une machine-outil (10), comprenant les étapes suivantes :
- faire fonctionner un moyen d'éclairage (32) dans un mode de fonctionnement normal pour éclairer l'espace de travail (14),
- recevoir une pièce (50) dans le porte-pièce (18) dans l'espace de travail (14),
- détecter l'état réel de la pièce (50) dans le porte-pièce (18) dans l'espace de travail (14),
- fournir un signal de surveillance décrivant l'état réel de la pièce (50),
- déterminer, sur la base du signal de surveillance, si la pièce (50) se trouve dans un premier état de réception ou dans un deuxième état de réception, et
- faire fonctionner sélectivement sur cette base le moyen d'éclairage (32) dans un mode de fonctionnement par signal afin de fournir dans l'espace de travail (14) une information visuelle destinée à illustrer l'état de réception de la pièce (50).

15. Programme de commande de machine comprenant un code de programme qui est configuré pour amener un moyen de commande (68) d'une machine-outil (10) à exécuter les étapes du procédé selon la revendication 14 lorsque le programme de commande de machine est exécuté sur le moyen de commande (68).
